# FASCICULE DE BREVET EUROPEEN

(11) **EP 3 530 807 B1**
(45) Date de publication et mention de la délivrance du brevet: **05.05.2021**
(21) Numéro de dépôt: 19159045.4
(22) Date de dépôt: 25.02.2019
(51) Int. Cl.: E01F 13/12, A01G 9/02, A47C 11/00, B62H 3/04, B62H 3/00

(54) **DISPOSITIF DE SÉCURITÉ POUR BLOQUER L'ACCÈS D'UN VÉHICULE À UNE ZONE PUBLIQUE**
SICHERHEITSVORRICHTUNG ZUR BLOCKIERUNG DES ZUGANGS EINES FAHRZEUGS IN EINER ÖFFENTLICHEN ZONE
SAFETY DEVICE FOR BLOCKING THE ACCESS OF A VEHICLE TO A PUBLIC AREA

(30) Priorité: 26.02.2018 FR 1851643
(43) Date de publication de la demande: 28.08.2019
(73) Titulaire: Papi, 60530 Le Mesnil en Thelle (FR)
(72) Inventeur: FEREY, Valéry, 14000 Caen (FR); SCHERA, Pierre, 95620 Parmain (FR); DE PUIFFE DE MAGONDEAU, Philippe, 14230 La Cambe (FR)
(74) Mandataire: Cabinet HERRBURGER

(56) Documents cités:
- DE-U1- 7 718 388
- DE-U1- 29 707 746
- DE-U1-202005 003 667
- FR-A1- 2 697 144
- US-A1- 2003 086 761

## Description

### Domaine de l'invention

La présente invention a pour objet un dispositif de sécurité en forme de bloc lourd en béton pour barrer l'accès forcé de véhicules à une zone piétonne.

### Etat de la technique

Il existe de multiples dispositifs pour interdire un tel accès.

Toutefois, ces dispositifs peuvent être des installations provisoires destinées à protéger une zone ouverte au public pendant une durée déterminée pour une manifestation et des zones réservées exclusivement au public mais qui pourraient être empruntées par des véhicules, par exemple des zones piétonnes.

Les installations relativement provisoires peuvent être constituées par des herses ou une succession de barrières mais ces installations étant amovibles, elles sont relativement légères et peuvent être bousculées au moins partiellement par un véhicule qui veut forcer le passage.

L'autre type d'équipement est celui de blocs lourds en béton tels que décrits dans US 2003/086761 A et DE 77 18 388 U, qui sont posés à l'entrée de zones à protéger. Ces blocs sont suffisamment rapprochés pour ne pas permettre le passage d'un véhicule mais laisser passer les piétons ou des cyclistes.

Mais ces blocs, très visibles dans l'environnement, sont sans caractéristiques esthétiques particulières ni autre utilité que celle de faire barrage, aussi sont-ils perçus de manière négative par le public.

### But de l'invention

La présente invention a pour but de développer un dispositif de sécurité du type blocs en béton, c'est-à-dire un dispositif lourd destiné à interdire l'accès à des véhicules qui voudraient pénétrer dans une zone réservée à un public piéton.

### Exposé et avantages de l'invention

A cet effet, l'invention a pour objet un dispositif de sécurité en forme de bloc lourd en béton pour barrer l'accès forcé de véhicules à une zone protégée. Le corps en béton a une forme globalement tronconique avec un dessous, une paroi latérale et un dessus, le dessous étant muni de pieds et la paroi latérale de consoles de fixation avec des surfaces latérales de fixation, et le dessus a une cavité ouverte.

Ce dispositif de sécurité se transporte et s'installe facilement car muni de pieds, il peut être pris par les fourches d'un engin de levage pour être placé à l'endroit approprié ou être dégagé de son emplacement.

Les pieds stabilisent le positionnement du bloc tout en l'accrochant à la surface sur laquelle il repose grâce à la pression exercée par le poids du corps en béton sur les pieds.

Comme le dispositif de sécurité est en général installé sur une surface plus ou moins régulière telle qu'une surface pavée de zone piétonne, il est difficile à déplacer par la simple poussée et résiste ainsi à des chocs violents que pourrait produire un véhicule lancé à pleine vitesse.

Ce dispositif de sécurité a l'avantage de combiner des fonctions décoratives ou utilitaires en plus de sa fonction de bloc lourd pour barrer un accès.

Comme il s'agit d'un bloc lourd en béton, il reçoit facilement des accessoires qui bénéficient de la stabilité du bloc. Ainsi, il pourra recevoir des accessoires tels qu'un banc circulaire entourant le bloc et fixés à celui-ci ou encore un râtelier à vélo formé de paires d'arceaux entre lesquels on engage la roue avant ou la roue arrière d'un vélo et que l'on fixe par une attache telle qu'un cadenas.

Le bloc peut également recevoir une attache de barrière à piétons à laquelle on pourra fixer de manière amovible et par exemple articulée une barrière à piétons.

Il pourra également recevoir un support de poubelle ou encore un poteau indicateur planté dans la cavité qui, par ailleurs, peut recevoir un bac de culture.

Le dispositif de sécurité assure ainsi également une fonction décorative ; le bac de culture pourra recevoir des plantations décoratives.

Dans une même zone équipée de tels dispositifs de sécurité, on pourra individualiser les dispositifs par les accessoires en fonction de l'utilité de ces accessoires à tel ou tel emplacement.

De façon avantageuse, le corps formé par le bloc en béton est un tronc de cône de section circulaire ou elliptique ou polygonale.

Un corps ayant une symétrie de rotation a l'avantage de ne pas présenter de côtés préférentiels. Il pourra ainsi être positionné dans une orientation quelconque.

Suivant une autre caractéristique particulièrement avantageuse, le dispositif de sécurité comporte une coque tronconique en matière plastique, fixée au corps, enveloppant au moins sa paroi latérale et se prolongeant par un retour débordant sur le dessus du corps et laissant libre l'accès à la cavité, la coque ayant des découpes pour accéder aux consoles et y fixer tel ou tel accessoire.

Cette coque tronconique constitue l'habillage de la partie supérieure du dispositif de sécurité. Cette coque pourra être teintée au choix et sa surface extérieure sera de préférence irrégulière ou rugueuse pour compliquer le collage de placards publicitaires ou autres et faciliter l'enlèvement éventuel de tels placards.

Cette coque tronconique fonctionnelle et décorative une fois défraîchie par une exposition prolongée au soleil ou aux intempéries, pourra être facilement remplacée sans que la masse pesante formée par le corps en béton ne soit remplacée.

Suivant une caractéristique, le corps forme un épaulement périphérique recevant le bord inférieur de la coque tronconique.

De façon avantageuse, pour faciliter l'installation des accessoires et uniformiser leur mode de fixation, la console forme une surface d'appui plane, sensiblement verticale pour recevoir la platine de fixation d'un accessoire. Cette surface d'appui sera munie d'inserts de vissage intégrés dans la masse du béton.

De façon avantageuse, le corps est formé de deux parties assemblées, un socle avec un dessus plan et un dessous muni des pieds, un chapeau dont le dessous est plan pour venir sur le dessus du socle, le chapeau ayant un contour légèrement inférieur à celui du dessus du socle pour réaliser, après assemblage, l'épaulement.

Cette réalisation du corps en deux parties facilite considérablement le moulage du corps puisque les deux parties étant de forme globalement tronconique, c'est-à-dire avec une contre-dépouille même légère, pourront facilement se mouler.

La réalisation du corps en deux parties permet également de faire différentes combinaisons du chapeau et du socle, avec par exemple un socle ayant des pieds plus ou moins hauts en fonction de données particulières des emplacements auxquels est destiné le dispositif de sécurité.

De façon avantageuse, le socle comporte quatre pieds qui facilitent la prise du socle par des fourches suivant un angle d'approche pratiquement quelconque.

Il peut également être réalisé comme un socle avec trois pieds offrant une plus grande stabilité sur une surface irrégulière.

Le socle et le chapeau sont assemblés par collage et/ou serrage par des tiges filetées solidaires chacune d'un bouchon conique engagé dans une cheminée conique du fond du chapeau et traversant le socle pour recevoir un écrou.

La cavité réalisée dans le corps en béton, notamment dans le chapeau, a une forme tronconique renversée pour recevoir un bac de culture et le fond de la cavité est relié au dessous du corps par une cheminée d'évacuation d'eau. Cela évite que de l'eau de pluie ou de l'eau d'arrosage du bac de culture ne stagne dans la cavité. Cela permet également de nettoyer facilement la cavité au jet d'eau en passant dans l'intervalle entre le bac de culture et la paroi de la cavité.

Les accessoires, comme indiqué ci-dessus, se fixent aux consoles par une platine portée par les accessoires.

Dans le cas du banc circulaire, celui-ci entoure la totalité du corps ou seulement une fraction de celui-ci en étant fixé aux consoles. Le banc circulaire est par exemple formé par une structure de support munie d'équerres portant un ou plusieurs anneaux de support, les équerres ayant une branche verticale pour la fixation à une console et une branche horizontale pour tenir le ou les anneaux ainsi qu'une jambe reliant le dessous de la branche horizontale au prolongement de la branche verticale vers le bas, les anneaux et les branches horizontales étant couverts par des lattes de forme circulaire.

Le banc ainsi fixé au corps du dispositif de sécurité est particulièrement stable bénéficiant du poids du corps en béton.

Il est également possible de combiner plusieurs accessoires sur un même dispositif de sécurité tels qu'un banc circulaire occupant une partie de la périphérie du dispositif entre deux ou plusieurs consoles et un accessoire tel qu'un support de poubelle installé dans une position diamétralement opposée à celle du banc ou encore un râtelier à vélo.

### Dessins

La présente invention sera décrite ci-après à l'aide de différents modes de réalisation d'un dispositif de sécurité représentés dans les dessins annexés dans lesquels :
- la figure 1 est une vue isométrique d'un premier mode de réalisation d'un dispositif de sécurité selon l'invention,
- la figure 2A est une vue de côté du dispositif de la figure 1,
- la figure 2B est une vue de dessus du dispositif de la figure 1,
- la figure 3 est une vue isométrique de la coque enveloppant partiellement le dispositif de sécurité selon la figure 1,
- la figure 4 est une vue isométrique en coupe axiale d'une variante de réalisation du dispositif de la figure 1, selon le plan de coupe AA de la figure 7,
- la figure 5 est une vue en coupe axiale du dispositif de sécurité selon le plan de coupe AA,
- la figure 6 est une vue en coupe axiale du dispositif de sécurité de la figure 1, selon le plan de coupe AA de la figure 7,
- la figure 7 est une vue de dessus du mode de réalisation du dispositif de sécurité de la figure 6,
- la figure 8 est une vue isométrique d'un dispositif de sécurité équipé d'un banc circulaire,
- la figure 9A est une vue isométrique de dessous du dispositif de sécurité de la figure 8,
- la figure 9B est une vue de dessous de la structure de l'accessoire équipant le dispositif de sécurité de la figure 8,
- la figure 10 est une vue isométrique d'un dispositif de sécurité équipé d'accessoires en forme de supports à vélo,
- la figure 11A est une vue de dessus partielle du dispositif de sécurité de la figure 10 occupé par quelques vélos,
- la figure 11B est une vue de côté du dispositif de sécurité de la figure 10 avec la mise en place d'un vélo dans un support à vélo,
- la figure 12 est une vue de côté d'un dispositif de sécurité muni d'un support pour fixer une barrière à piétons,
- la figure 13A est une vue isométrique d'un premier mode de réalisation de l'accessoire pour relier une barrière à piétons à une console d'un dispositif de sécurité selon la figure 12,
- la figure 13B est une vue isométrique d'une variante de l'attache du dispositif de sécurité de la figure 13A,
- la figure 14 est une vue isométrique d'un autre accessoire en forme de poubelle de rue fixé au dispositif de sécurité,
- la figure 15A est une vue isométrique du support permettant de fixer la poubelle,
- la figure 15B est une vue de côté correspondant à la figure 14,
- la figure 16 est une vue isométrique d'un accessoire de dispositif de sécurité en forme de poteau indicateur,
- la figure 17 montre une glissière installée entre deux dispositifs de sécurité,
- la figure 18 est une vue de détail de l'attache fermant la fixation de la glissière sur les dispositifs de sécurité.

### Description de modes de réalisation de l'invention

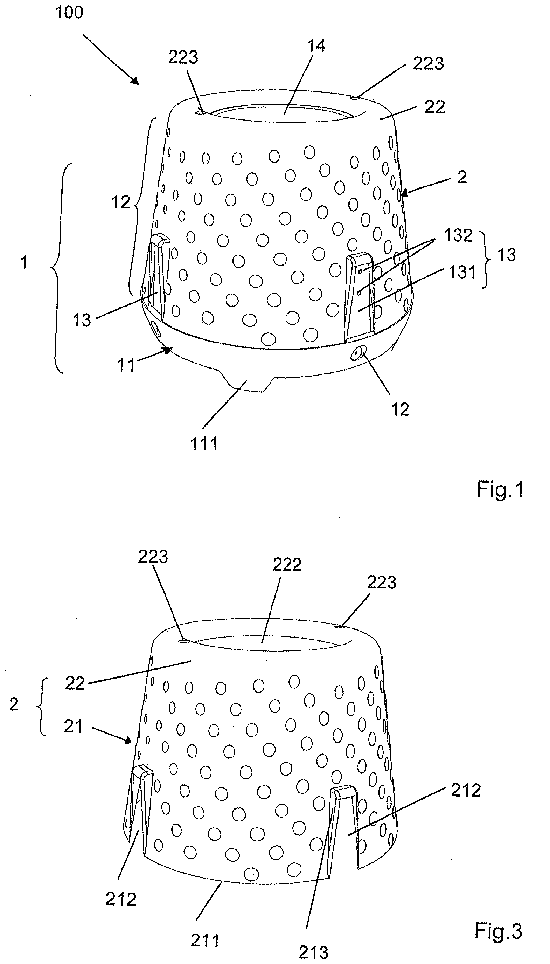

Selon les figures 1-7, l'invention a pour objet un dispositif de sécurité 100 en forme de bloc lourd destiné à être installé à l'entrée d'une zone interdite aux véhicules, par exemple une zone publique, pour bloquer son accès à un véhicule qui voudrait forcer le passage.

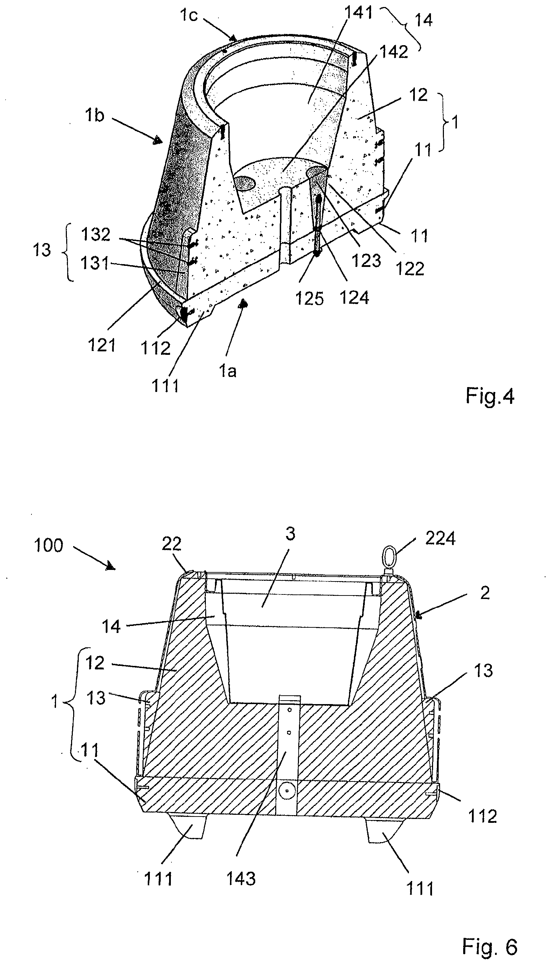

Les figures 1-3 montrent l'aspect extérieur, apparent du dispositif de sécurité 100 et les figures 4-7 montrent la structure interne de celui-ci.

Selon les figures 1-3, le dispositif 100 se compose d'un corps 1 formé d'un socle 11 muni de pieds 111 et d'un chapeau 12 couvert par une coque 2 et n'apparaissant pas directement dans ces figures.

La coque 2 a une paroi tronconique 21 avec un retour 22 et un bord rentrant délimitant une ouverture 222 pour accéder à la cavité 14 du corps du dispositif 100.

La paroi 21 de la coque 2 est munie de découpes 212 partant du bord inférieur 211 et coiffant les consoles 13 du chapeau 12 en laissant dégagées les surfaces d'appui 131 des consoles 13 et les douilles de vissage 132 intégrées dans le chapeau.

Les découpes 212 sont munies d'un bord 213 couvrant le haut et les côtés des consoles 13. Le socle 11 est muni de catadioptres 112.

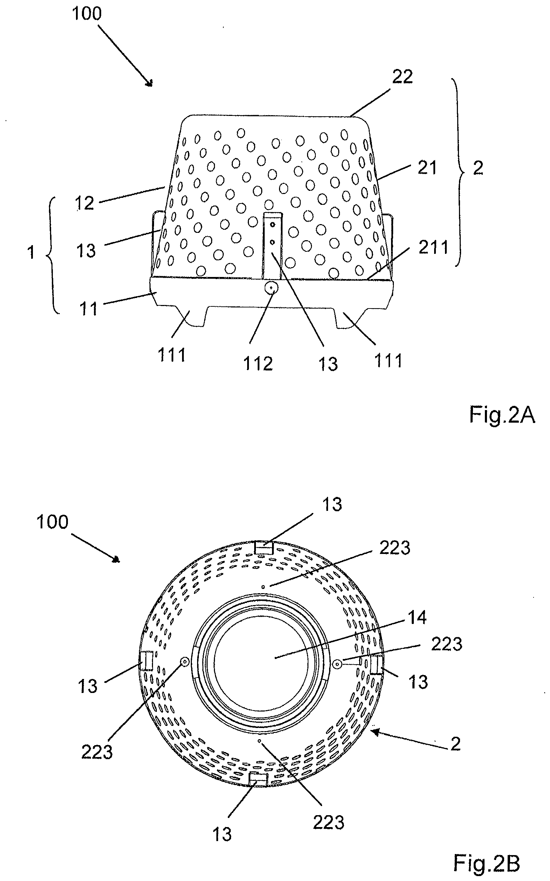

La vue de côté (figure 2A) et la vue de dessus (figure 2B) donnent une idée plus complète du dispositif de sécurité 100 montrant la répartition des quatre consoles 13 et dans les intervalles entre les consoles, les pieds 111. La vue de dessus (figure 2B) montre les orifices 223 pour les deux anneaux 224 et la fixation de la coque 2 au corps 1.

La structure intérieure du dispositif de sécurité 100 sera détaillée ci-après à l'aide des figures 4-7. Cette structure intérieure réalise les fonctions du dispositif de sécurité 100, à savoir la masse pesante et les moyens de réception des accessoires.

A titre d'exemple, le dispositif de sécurité 100 est de préférence comme cela sera vue ensuite, de forme de révolution d'un diamètre de l'ordre de 100-120 cm et d'une hauteur de l'ordre de 100 m pour constituer un obstacle lourd, solide et encombrant.

La forme même légèrement tronconique réalise une faible contre-dépouille nécessaire pour le démoulage.

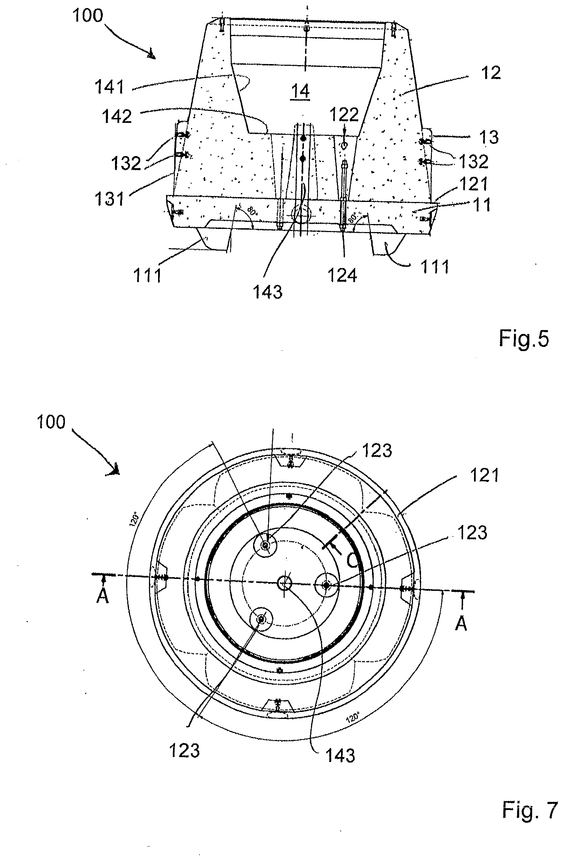

Selon les figures 4 et 5, le dispositif de sécurité 100 se compose d'un corps 1 en béton 1 ayant une forme globalement tronconique. Le corps 1 a un dessous la muni des pieds 111 pour faciliter la prise du dispositif et son installation en permettant le passage d'une fourche élévatrice d'un engin de levage.

Les consoles de fixation 13 de la paroi latérale tronconique 1b sont légèrement en saillie pour former les surfaces d'appui 131 planes, verticales, servant à fixer un accessoire. Les consoles 13 se situent dans la partie inférieure de la paroi latérale 1b du corps 1.

La cavité 14 dans le dessus le du corps reçoit un accessoire, notamment un bac de culture 3. La paroi 141 est de forme cylindrique dans le haut et tronconique vers le fond 142 de la cavité qui est percé d'une cheminée 143 d'évacuation de l'eau arrivant dans la cavité 14. Cette cheminée 143 débouche dans le dessous la du corps 1.

Le corps 1 peut se décomposer en une partie inférieure formant un socle 11 et une partie supérieure formant un chapeau 12. Pour des raisons de fabrication, d'encombrement et d'esthétique, le socle 11 est de forme tronconique renversée, sa grande base étant tournée vers le haut, à l'inverse du chapeau 12. Cette forme tronconique renversée du socle 11 permet de faire rentrer les pieds 111 dans le contour de la grande base de façon à ce qu'ils ne constituent pas un obstacle proéminent pour un piéton qui passerait près du dispositif ou se tiendrait directement à proximité de celui-ci.

Les pieds 111 sont de préférence de forme prismatique avec une surface d'appui au sol, réduite, pour faciliter la mise en place sur un sol relativement irrégulier comme un pavage de zone piétonne. Cela a également l'avantage d'une part d'accrocher les pieds 111 dans les irrégularités du sol et d'autre part, d'augmenter la pression au niveau de la surface d'appui, ce qui évite que par vandalisme, on puisse déplacer le dispositif de sécurité 100 ; cela augmente également la résistance à un choc avec un véhicule.

Le chapeau 12 rejoint le socle 11 par sa périphérie légèrement inférieure à celle de la grande base du socle pour former un épaulement 121 servant d'appui au bord inférieur 211 de la coque 2.

Selon la vue en coupe de la figure 4, le corps la du dispositif de sécurité 100 est en deux parties, le socle 11a et le chapeau 12a ; ces deux parties 11a, 12a sont moulées séparément puis assemblées par des tiges filetées 124 portées par des bouchons coniques 123 logés dans des cheminées coniques 122 et traversant le fond du chapeau 12a et traversant un perçage du socle 11a et recevant un écrou 125.

Le corps 1 en béton reçoit la coque 2 en matière plastique, moulée, notamment rotomoulée et qui coiffe le chapeau 12 en épousant sa forme. La coque 2 (figures 1, 3, 6) est une enveloppe tronconique de paroi 21 se poursuivant par le dessus formant le retour 22 rentrant et délimitant l'ouverture 222 correspondant à celle de la cavité 14 du corps 1 avec aussi les découpes 212 pour chevaucher les consoles 13. Le bord inférieur 211 de la coque 2 s'appuie sur l'épaulement 121 et son retour supérieur 22 comporte deux orifices 223 pour dégager les deux orifices de fixation d'anneaux amovibles 224 servant à soulever le dispositif avec une élingue accrochée par un mât de grue. La surface de la paroi 21 est de préférence rendue irrégulière pour éviter le collage de placards publicitaires ou pour rendre ce collage plus difficile que sur une surface lisse. La matière de la coque peut être teintée.

La forme globalement tronconique du dispositif de sécurité 100 est de préférence de section circulaire, voire elliptique ou polygonale. Cette forme symétrique de rotation ou assimilée à une telle forme a l'avantage de ne pas imposer d'orientation préférentielle au dispositif 100 lors de sa mise en place. La seule contrainte peut être celle imposée par les accessoires fixés aux consoles 13. Mais cette orientation éventuelle imposée ne modifie pas l'aspect d'ensemble du dispositif 100.

La symétrie de rotation est également celle de la position des pieds 111 ou des consoles 13 qui sont au nombre de trois ou de quatre. Un socle 11 à trois pieds 111 est avantageux pour la stabilité, notamment sur un sol irrégulier mais il ne permet pas un accès facile aux dents d'une fourche de levage car cela limite fortement l'angle par lequel on peut engager la fourche sous le socle.

Un socle 11 à quatre pieds 111 est avantageux pour le passage des dents de la fourche de levage car l'orientation des dents peut être pratiquement quelconque.

La vue en coupe des figures 4 et 5 montre également les douilles de vissage 132 intégrées dans les consoles 13. Outre les accessoires qui seront décrits ultérieurement, le corps 1 est également muni de catadioptres 112.

Les figures 6 et 7 montrent le dispositif 100 avec le corps 1 assemblés et couverts par la coque 2.

Le dispositif de sécurité 100 peut recevoir différents accessoires dont certains seront décrits ci-après.

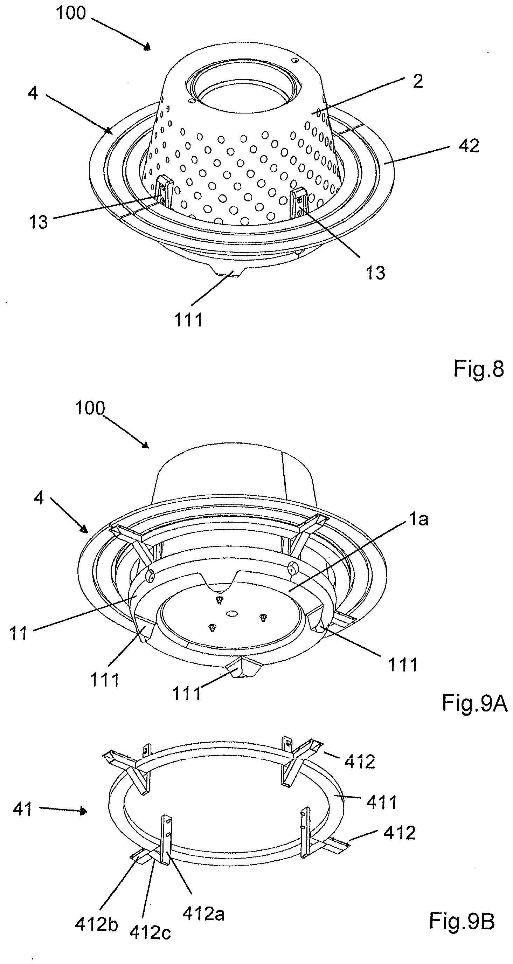

Les figures 8, 9A, 9B montrent un accessoire en forme de banc circulaire 4 porté par le dispositif de sécurité 100. Le banc 4 se compose d'une structure de support 41 portant des lattes 42 formant l'assise. La structure de support 41 est composée d'un anneau 411 formé d'un tube cintré solidaire d'équerres 412. Chaque équerre 412 se compose d'une branche verticale 412a et d'une branche horizontale 412b reliée à l'anneau 411 et à la branche verticale 412a. La branche horizontale 412b est soutenue par une jambe 412c reliant la branche horizontale au prolongement de la branche verticale 412a sous le plan de l'anneau 411. La partie de la branche verticale 412a au-dessus de l'anneau 411 constitue l'élément de fixation qui est solidarisé à la surface d'appui 131 d'une console 13.

La forme de la structure 41 est adaptée aux dimensions du corps 1 et les équerres 412 à la position des consoles 13 au nombre de quatre aux figures 8, 9A, 9B.

La structure 41 du banc 4 est une pièce mécanosoudée.

L'anneau 411, cintré, est composé de quatre arcs de cercle qui se rejoignent contre la branche horizontale 412b des équerres 412, elles aussi formées de tubes rectangulaires de même épaisseur de façon que le dessus de l'anneau 411 et des branches horizontales 412b définisse le plan recevant les lattes 42 de l'assise. Les lattes 42 sont par exemple des tubes en matière plastique, cintrés, en demi-cercle.

La vue en perspective de dessous de la figure 9A montre la forme particulière des pieds 111 en tronc de pyramide délimitant les dégagements du dessous la du socle 11 pour le passage des deux dents d'une fourche d'engin de levage tout en constituant des butées latérales retenant le corps 1 sur la fourche de levage.

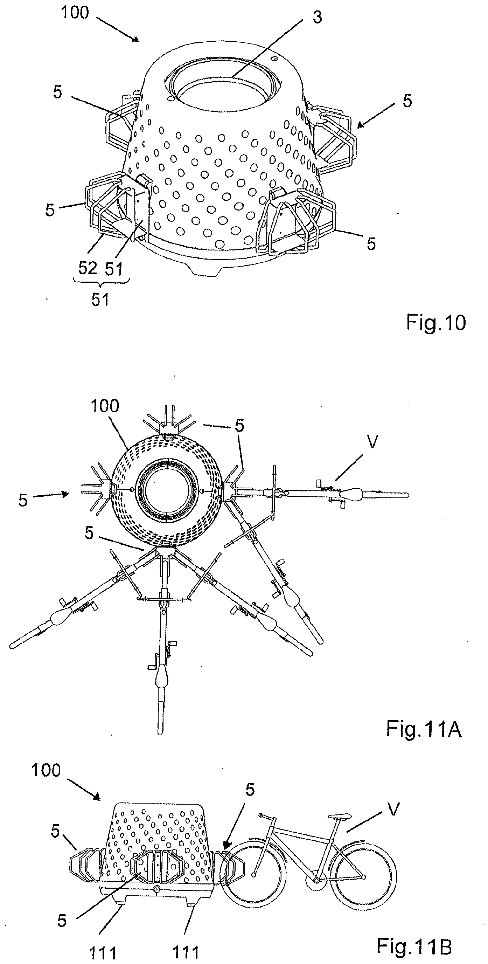

Les figures 10, 11A, 11B montrent des accessoires en forme de râtelier 5 pour des roues de vélo. Ces râteliers 5 sont fixés aux consoles 13 du dispositif de sécurité 100.

Le râtelier 5 a un support 51 en tôle pliée portant des paires d'arceaux 52 pour recevoir chacune une roue de vélo V.

Le support 51 est vissé à la console 13. Les paires d'arceaux 52 font entre elles un angle de l'ordre de 60° pour installer trois vélos dans un râtelier 5 avec leur roue avant ou éventuellement leur roue arrière engagée dans les arceaux 52 et retenues par des chaînes ou des cadenas.

La figure 11A montre une telle disposition et la vue de côté de la figure 11B montre un vélo V engagé avec sa roue avant dans une paire d'arceaux 53.

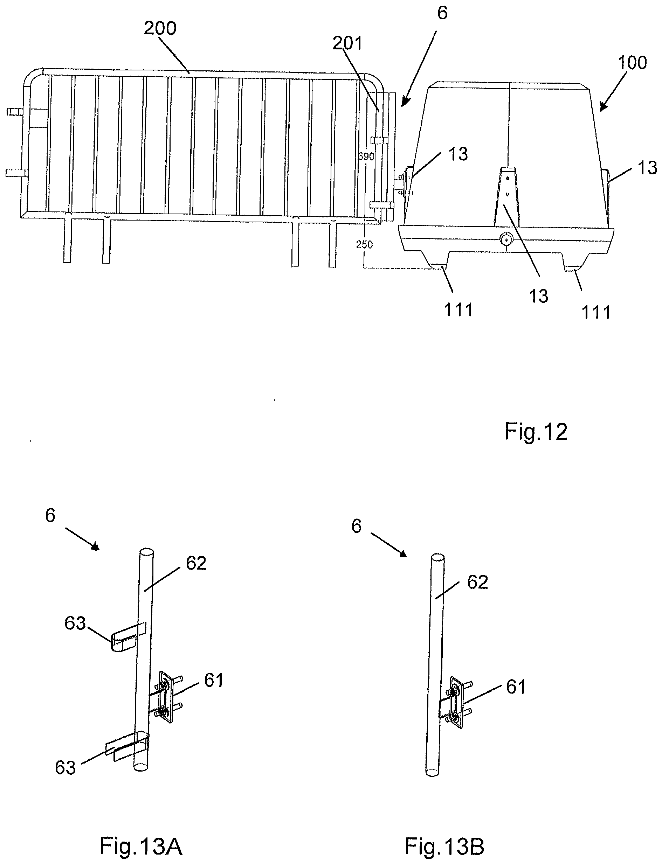

Les figures 12, 13A, 13B montrent un accessoire en forme d'attache 6 pour relier une barrière à piétons 200 à un dispositif de sécurité 100. Cet accessoire 6 est formé d'une platine 61 portant un tube 62 muni ou non de pattes 63 pour être fixé à un côté 201 d'une barrière de piétons 200.

La platine 61 se fixe à la surface d'appui 131 d'une console 13 du dispositif de sécurité 100.

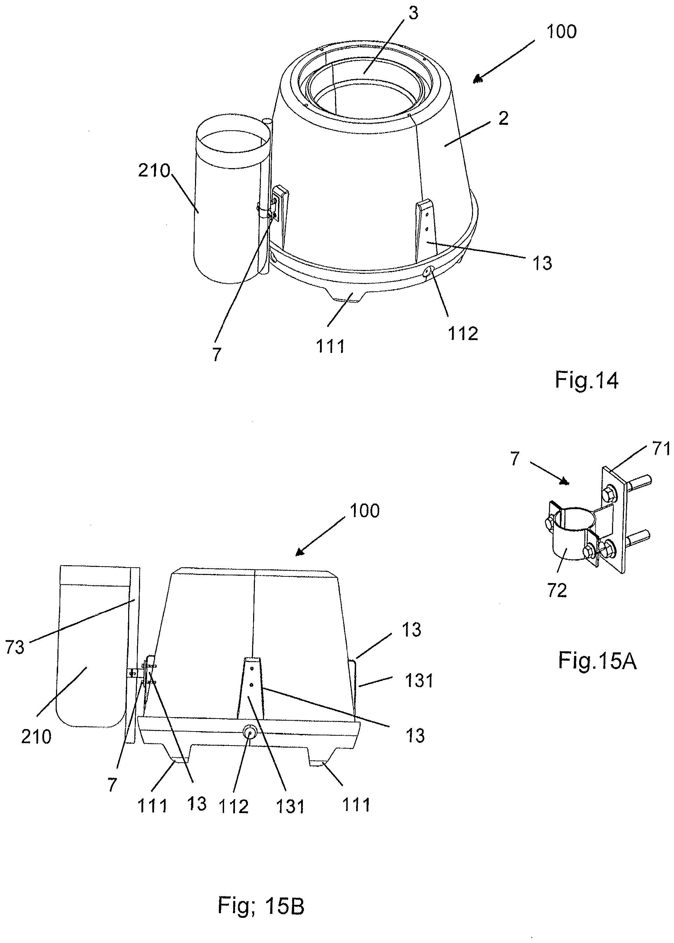

Les figures 14, 15A, 15B montrent un accessoire 7 pour recevoir une poubelle de rue. L'accessoire 7 se compose d'une platine 71 munie d'un collier 72 pour recevoir un tube 73 muni d'un arceau 4 ou autre moyen de fixation pour une poubelle rigide 210 ou un sac poubelle.

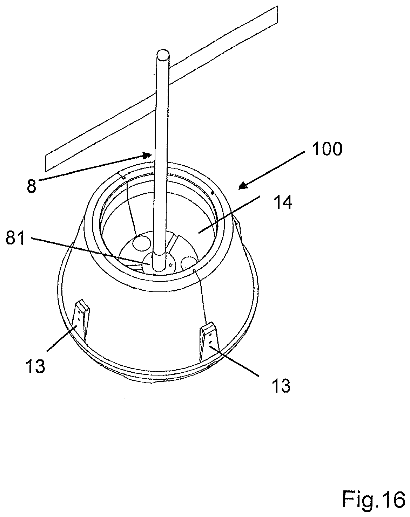

La figure 16 montre un accessoire en forme de poteau indicateur 8 fixé par sa base 81 dans la cheminée 143 du fond de la cavité 14.

Cet accessoire en forme de poteau indicateur peut être combiné à un ou plusieurs autres accessoires installés sur les consoles.

D'ailleurs et comme déjà indiqué ci-dessus, les accessoires peuvent être combinés sur un même dispositif de sécurité tels que par exemple une partie de banc circulaire, une attache de barrière à piétons, un râtelier à vélo.

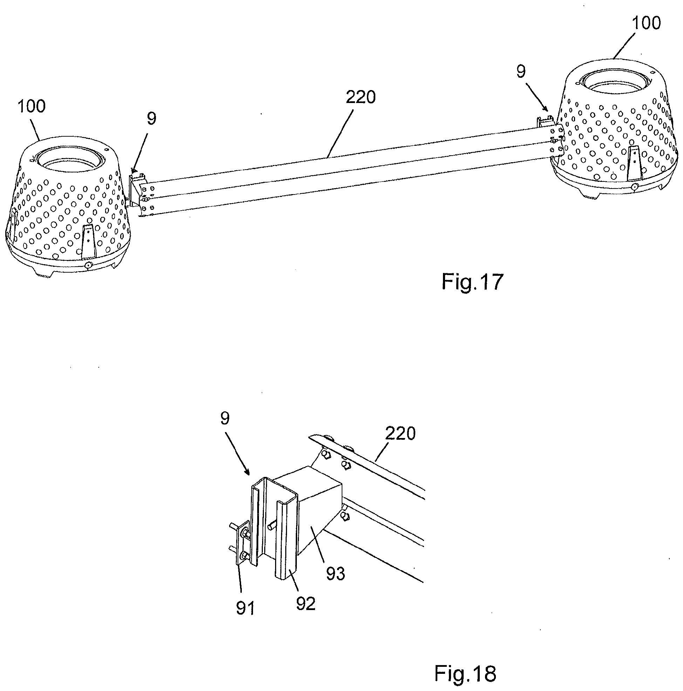

Selon la figure 17, un rail profilé ou glissière 220 est installé(e) entre deux dispositifs de sécurité 100 par les supports de glissière formés d'un tronçon de profilé 92 portant l'extrémité de la glissière 220 par un bloc de fixation 93. Une platine 91 est fixée au segment de profilé 92 pour être reliée à la console 13 d'un dispositif de sécurité 100.

Les éléments 92, 93 sont ceux par lesquels les glissières 220 se fixent habituellement à des poteaux le long des routes ou autoroutes.

Dans cette installation, on peut également fixer un tube dans le segment de profilé 92 pour installer une autre glissière au-dessus de la première qui, elle, se situe au niveau des consoles 13 des dispositifs 100.

### NOMENCLATURE DES ELEMENTS PRINCIPAUX

- 100: Dispositif de sécurité
- 1: Corps
- 1a: Dessous
- 1b: Paroi latérale
- 1c: Dessus
11 Socle
111 Pied
112 Catadioptre
12 Chapeau
121 Epaulement
122 Cheminée conique
123 Bouchon conique
124 Tige filetée
125 Ecrou
13 Console
131 Surface d'appui
132 Douille de vissage
14 Cavité
141 Paroi latérale
142 Fond
143 Cheminée
15 Paroi
- 2: Coque
21 Paroi
211 Bord inférieur
212 Découpe
213 Bord
22 Retour
221 Bord rentrant
222 Ouverture
223 Orifice
224 Anneau
- 3: Bac de culture
- 4: Banc circulaire
41 Structure de support
411 Anneau
412 Equerre
412a Branche verticale
412b Branche horizontale
412c Jambe
42 Lattes
- 5: Râtelier à vélos
51 Dossier
52 Paires d'arceaux
- 6: Attache de barrière
61 Platine
62 Tube
63 Pattes
- 7: Support de poubelle de rue
71 Platine
72 Collier
73 Tube
74 Arceau
- 8: Poteau indicateur
81 Base de fixation du poteau
- 9: Attache
91 Platine
92 Segment de profilé
93 Bloc de fixation
- 200: Barrière à piétons
- 201: Côté de la barrière
- 210: Poubelle
- 220: Glissière

## Revendications

1. Dispositif de sécurité en forme de bloc lourd en béton pour barrer l'accès forcé de véhicules à une zone protégée, le corps en béton (1) ayant une forme globalement tronconique avec un dessous (1a), une paroi latérale (1b) et un dessus (le),
**caractérisé en ce que**
- le dessous (1a) est muni de pieds (111),
- la paroi latérale (1b) a des consoles de fixation (13) avec des surfaces latérales (131) de fixation, et
- le dessus (1c) a une cavité ouverte (14).

2. Dispositif de sécurité selon la revendication 1,
**caractérisé en ce qu'**
il comporte une coque tronconique (2) en matière plastique, fixée au corps (1), enveloppant au moins sa paroi latérale (1b) se prolongeant par un retour (22) débordant sur le dessus (1a) du corps et laissant libre l'accès à la cavité (14), la coque (2) ayant des découpes (212) pour laisser l'accès aux consoles (13).

3. Dispositif de sécurité selon les revendications 1 et 2,
**caractérisé en ce que**
le corps (1) forme un épaulement périphérique (121) recevant le bord inférieur (211) de la coque tronconique (2).

4. Dispositif de sécurité selon la revendication 1,
**caractérisé en ce que**
la console (13) forme une surface d'appui (131) plane, sensiblement verticale, pour recevoir la platine de fixation d'un accessoire (4-7).

5. Dispositif de sécurité selon la revendication 1,
**caractérisé en ce que**
la cavité (14) a une paroi (141) de forme tronconique renversée pour recevoir un bac de culture (3), le fond (142) de la cavité étant relié au dessous (1a) du corps (1) par une cheminée d'évacuation d'eau (143).

6. Dispositif de sécurité selon la revendication 3,
**caractérisé en ce que**
- le corps est formé de deux parties (11, 12) assemblées,
- un socle (11) avec un dessus plan et un dessous muni des pieds (111),
- un chapeau (12) dont le dessous est plan pour venir sur le dessus du socle, le chapeau (12) ayant un contour légèrement inférieur à celui du dessus du socle pour réaliser après assemblage, l'épaulement (121).

7. Dispositif de sécurité selon la revendication 6,
**caractérisé en ce que**
le socle (11) et le chapeau (12) sont assemblés par collage et/ou serrage par des tiges filetées (124) solidaires chacune d'un bouchon conique (123) engagé dans une cheminée conique (122) du fond (142) traversant le socle (11) et recevant un écrou (125).

8. Dispositif de sécurité selon la revendication 1,
**caractérisé en ce que**
le corps (1) est un tronc de cône de section circulaire ou elliptique ou polygonale.

9. Dispositif de sécurité selon les revendications 1, 4 ou 5,
**caractérisé en ce qu'**
il comporte des accessoires choisis dans le groupe formé par un banc circulaire (4), un râtelier à vélo (5) avec des paires d'arceaux (52) pour recevoir des roues de vélo, une attache de barrière (6) ou un support de poubelle (7), une attache (9) de glissière (220), ces accessoires étant fixés aux surfaces d'appui (131) des consoles (13) ou un poteau indicateur (8) engagé par une base de fixation (81) dans la cheminée (143) traversant le fond de la cavité (14) du chapeau (12) ou un bac de culture (3) placé dans la cavité du corps (1).

10. Dispositif de sécurité selon la revendication 9,
**caractérisé en ce que**
le banc circulaire (4) est formé par une structure de support (41) munie d'équerres (412) portant un ou plusieurs anneaux (411), les équerres ayant une branche verticale (412a) pour la fixation à une console (13), une branche horizontale (412b) pour tenir le ou les anneaux (411) et une jambe (412c) reliant le dessous de la branche horizontale (412b) au prolongement de la branche verticale (412a) vers le bas, le ou les anneaux et les équerres étant couverts de lattes (42).

## Patentansprüche

1. Sicherheitsvorrichtung in Form eines schweren Blocks aus Beton zum Sperren des erzwungenen Zugangs von Fahrzeugen in einer geschützten Zone,
wobei der Betonkörper (1) eine im Ganzen kegelstumpfförmige Form mit einer Unterseite (1a), einer Seitenwand (1b) und einer Oberseite (1c) aufweist,
**dadurch gekennzeichnet, dass**
- die Unterseite (1a) mit Füßen (111) versehen ist,
- die Seitenwand (1b) Befestigungskonsolen (13) mit Seitenflächen (131) zur Befestigung aufweist, und
- die Oberseite (1c) einen offenen Hohlraum (14) aufweist.

2. Sicherheitsvorrichtung nach Anspruch 1,
**dadurch gekennzeichnet, dass**
sie ein kegelstumpfförmiges Gehäuse (2) aus Kunststoff umfasst, das an dem Körper (1) befestigt ist, wobei es zumindest seine Seitenwand (1b) umhüllt und sich über eine Rückführung (22) ausdehnt, die über die Oberseite (1c) des Körpers hinausragt und den Zugang zum Hohlraum (14) freilässt, wobei das Gehäuse (2) Aussparungen (212) aufweist, um den Zugang zu den Konsolen (13) auszusparen.

3. Sicherheitsvorrichtung nach den Ansprüchen 1 und 2,
**dadurch gekennzeichnet, dass**
der Körper (1) eine Umfangsschulter (121) bildet, welche die untere Kante (211) des kegelstumpfförmigen Gehäuses (2) aufnimmt.

4. Sicherheitsvorrichtung nach Anspruch 1,
**dadurch gekennzeichnet, dass**
die Konsole (13) eine ebene Auflagefläche (131) bildet, die im Wesentlichen vertikal ist, um die Halteplatte eines Zubehörteils (4-7) aufzunehmen.

5. Sicherheitsvorrichtung nach Anspruch 1,
**dadurch gekennzeichnet, dass**
der Hohlraum (14) eine Wand (141) mit einer umgekehrten Kegelstumpfform aufweist, um einen Kulturtopf (3) aufzunehmen, wobei der Boden (142) des Hohlraums mit der Unterseite (1a) des Körpers (1) durch einen Wasserablauf (143) verbunden ist.

6. Sicherheitsvorrichtung nach Anspruch 3,
**dadurch gekennzeichnet, dass**
- der Körper aus zwei zusammengefügten Teilen (11, 12) gebildet wird,
- ein Sockel (11) eine ebene Oberseite und eine Unterseite aufweist, die mit Füßen (111) versehen ist,
- ein Deckel (12) eine Unterseite aufweist, die eben ist, um sich auf der Oberseite des Sockels zu platzieren, wobei der Deckel (12) eine Kontur aufweist, die etwas niedriger ist als die der Oberseite des Sockels, um nach dem Zusammenfügen die Schulter (121) umzusetzen.

7. Sicherheitsvorrichtung nach Anspruch 6,
**dadurch gekennzeichnet, dass**
der Sockel (11) und der Deckel (12) durch Verkleben und/oder Festklemmen durch Gewindestangen (124) zusammengefügt werden, die jeweils mit einem kegelförmigen Verschluss (123) verbunden sind, der in einen kegelförmigen Schacht (122) des Bodens (142) eingreift, wobei er den Sockel (11) durchquert und eine Mutter (125) aufnimmt.

8. Sicherheitsvorrichtung nach Anspruch 1,
**dadurch gekennzeichnet, dass**
der Körper (1) einem Kegelstumpf mit kreisförmigem oder elliptischem oder polygonalem Querschnitt entspricht.

9. Sicherheitsvorrichtung nach den Ansprüchen 1, 4 oder 5,
**dadurch gekennzeichnet, dass**
sie Zubehörteile umfasst, die aus der Gruppe ausgewählt sind, bestehend aus einer kreisförmigen Bank (4), einem Fahrradständer (5) mit Ständerpaaren (52), um die Räder von Fahrrädern aufzunehmen, einer Barrierebefestigung (6) oder einem Mülleimerträger (7), einer Befestigung (9) einer Leitplanke (220), wobei diese Zubehörteile an Auflageflächen (131) von Konsolen (13) befestigt sind oder einem Wegweiser (8), der durch eine Befestigungsbasis (81) in den Ablauf (143) eingreift, der den Boden des Hohlraums (14) des Deckels (12) durchquert oder einem Kulturtopf (3), der in dem Hohlraum des Körpers (1) platziert ist.

10. Sicherheitsvorrichtung nach Anspruch 9,
**dadurch gekennzeichnet, dass**
die kreisförmige Bank (4) durch eine Stützstruktur (41) gebildet wird, die mit Winkeln (412) versehen ist, die einen oder mehrere Ringe (411) tragen, wobei die Winkel einen vertikalen Schenkel (412a) zur Befestigung an einer Konsole (13), einen horizontalen Schenkel (412b) zum Halten des Rings oder der Ringe (411) und eine Strebe (412c) aufweisen, welche die Unterseite des horizontalen Schenkels (412b) mit der Verlängerung des vertikalen Schenkels (412a) nach unten verbindet, wobei der oder die Ringe und die Winkel mit Latten (42) bedeckt sind.

## Claims

1. Security device in the form of a heavy block of concrete for blocking forced access of vehicles to a protected zone, the concrete member (1) having
a generally frustoconical shape with a lower portion (1a), a lateral wall (1b) and an upper portion (1c),
**characterised in that**
- the lower portion (1a) is provided with feet (111),
- the lateral wall (1b) has fixing consoles (13) with lateral fixing surfaces (131), and
- the upper portion (1c) has an open cavity (14).

2. Security device according to claim 1,
**characterised in that**
it comprises a frustoconical shell (2) of plastics material which is fixed to the member (1) and which surrounds at least the lateral wall (1b) thereof extending via a return portion (22) which extends beyond the upper portion (1c) of the member and which leaves the access to the cavity (14) free, the shell (2) having cut-outs (212) in order to allow access to the consoles (13).

3. Security device according to claims 1 and 2,
**characterised in that**
the member (1) forms a peripheral shoulder (121) which receives the lower edge (211) of the frustoconical shell (2).

4. Security device according to claim 1,
**characterised in that**
the console (13) forms a substantially vertical planar support surface (131) for receiving the fixing plate of an accessory (4-7).

5. Security device according to claim 1,
**characterised in that**
the cavity (14) has a wall (141) of inverted frustoconical form in order to receive a cultivation tray (3), the bottom (142) of the cavity being connected to the lower portion (1a) of the member (1) via a water discharge vent (143).

6. Security device according to claim 3,
**characterised in that**
- the member is formed by two assembled portions (11, 12),
- a base (11) with a planar upper portion and a lower portion provided with the feet (111),
- a cap (12) whose lower portion is planar in order to move onto the upper portion of the base, the cap (12) having a contour which is slightly smaller than that of the upper portion of the base in order to produce the shoulder (121) after assembly.

7. Security device according to claim 6,
**characterised in that**
the base (11) and the cap (12) are assembled by means of adhesive-bonding and/or locking via threaded rods (124) which are each fixedly joined to a conical stopper (123) which is engaged in a conical vent (122) of the bottom (142) which extends through the base (11) and which receives a nut (125).

8. Security device according to claim 1,
**characterised in that**
the member (1) is a truncated cone having a circular or elliptical or polygonal cross-section.

9. Security device according to claims 1, 4 or 5,
**characterised in that**
it comprises accessories which are selected from the group formed by a circular bench, a bicycle rack (5) with pairs of hoops (52) for receiving bicycle wheels, a barrier fixing member (6) or a bin support (7), a fixing member (9) for a sliding member (220), these accessories being fixed to the support surfaces (131) of the consoles (13) or a signpost (8) which is engaged via a fixing base (81) in the vent (143) which extends through the bottom of the cavity (14) of the cap (12) or a cultivation tray (3) which is placed in the cavity of the member (1).

10. Security device according to claim 9,
**characterised in that**
the circular bench (4) is formed by a support structure (41) which is provided with brackets (412) which carry one or more rings (411), the brackets having a vertical branch (412a) for fixing to a console (13), a horizontal branch (412b) for holding the ring(s) (411) and a leg (412c) which connects the lower portion of the horizontal branch (412b) to the extension of the vertical branch (412a) in a downward direction, the ring(s) and the brackets being covered with battens (42).
